# EUROPEAN PATENT SPECIFICATION

(11) **EP 0 960 369 B1**
(45) Date of publication and mention of the grant of the patent: **04.07.2001**
(21) Application number: 98901933.6
(22) Date of filing: 11.02.1998
(51) Int. Cl.: G06F 3/033, G06K 11/18

(54) **AN INPUT DEVICE FOR A COMPUTER**
EINGABEVORRICHTUNG FÜR EINEN RECHNER
ORGANE D'ENTREE DESTINE A UN ORDINATEUR

(30) Priority: 12.02.1997 DK 15597; 21.04.1997 DK 44297; 03.07.1997 DK 79897
(43) Date of publication of application: 01.12.1999
(73) Proprietor: Kanitech A/S, 6000 Kolding (DK)
(72) Inventor: JENSEN, Jorgen, Korsgaard, DK-6000 Kolding (DK)
(74) Representative: Elmeros, Claus
(86) International application number: PCT/DK98/00053
(87) International publication number: WO 98/36346

(56) References cited:
- IBM TECHNICAL DISCLOSURE BULLETIN, Volume 27, No. 7A, December 1984, L.D. COMERFORD, "Magneto-Mechanical Mouse (Fast Cursor Positioning Device)", pages 3783-3784.
- XEROX DISCLOSURE JOURNAL, Volume 10, No. 3, June 1985, ANONYMOUS, "Optical Pen Mouse", pages 123-125.
- PATENT ABSTRACTS OF JAPAN; & JP,A,09 016 328 (NEC ENG LTD) 17 January 1997.

## Description

The present invention relates to an input device for positioning a cursor on a computer screen by movement of a ball relative to a substrate, and that these rotary movements of the ball are transformed into corresponding electronic signals, said the input device comprises magnetic detection means for detecting the angular rotation of the ball, preferably in two directions perpendicular to each other, said detection means comprising one or more detection units capable of detecting a magnetic signal representing the movement of the surface of the ball. The invention also relates to a method of detecting angular rotation of a ball.

The generally known input devices, such as computer mice, for the operation of a computer have certain drawbacks. The computer mouse requires some space available within the range of the computer user. Another requirement for the substrate of the mouse is that it must be a firm and plane as well as essentially horizontal substrate of a certain extent to enable the user to orient the screen projection of the mouse relative to the entire extent of the computer screen. It may sometimes be difficult or even impossible to place the computer such that the space required for the operation of the mouse is always available. Moreover, the known computer mouse solutions frequently give rise to pain in fingers and wrists after extended use.

Several attempts have been made to overcome these drawbacks, inter alia with several proposals for constructing the computer mouse as a ball-point pen. Such a "computer pen" will be extremely convenient, easy and more precise to operate, it being possible to utilise the circumstance that the fine motor function of the fingers is considerably better developed than that of the arms. Further, no strict requirements are made with respect to the substrate on which the mouse is used.

A computer mouse constructed as a ball-point pen will also be able to develop the general use of computers.

Thus, it is conceivable that the future use of computers will inter alia comprise "hand-written" letters or memos in electronic form. It will hereby be possible to impart a personal touch to the user of the computer, and to reduce the use of the keyboard completely or partly.

However, it has been found that the traditional embodiment of the arrangement for recording and transforming the movements of the ball into electrical signals requires a good deal of space particularly around the ball, which sets a limit to how small dimensions a pen-shaped computer mouse may be given. It is common to the known structures of "computer pens" that the external dimensions of the pen itself and of the ball are larger, and the computer pen hereby becomes more unhandy than ordinary ball-point pens.

The German Auslegeschrift No. DE 39 00 622 A1 describes a pen-shaped computer mouse, in which the recording of the movements of the ball is performed in that two rollers are in constant contact with the ball. The rollers rotate as a consequence of the rotation of the ball. A sensor unit is provided in connection with each of the rollers and records the rotation of the roller. The two rollers are arranged such that the movements of the ball in two directions relative to an x-axis and a y-axis may be recorded. This solution, which requires much space, resembles the normal rotation recording of the ball in an ordinary "box-shaped" computer mouse, but with the difference that space is just available behind the ball in the ball-point pen structure. Thus, the tubular computer mouse according to DE-39 00 622 A1 cannot be manufactured with a very small cross-sectional diameter, as the tube, directly behind the ball, must be able to accommodate the entire space-requiring recording arrangement.

Another embodiment of a pen-shaped structure of a computer mouse is moreover known from US-A-5 434 594. Here, the recording arrangement and the ball suspension are made in the same manner as in an ordinary "box-shaped" mouse. The result is a computer mouse of such a structure that only to a limited extent can it be said to provide the expected advantages which are desired in connection with a pen-shaped computer mouse.

EP-A-0 413 606 describes a combined ball-point pen and computer mouse. It operates in that a flow meter is arranged directly above the ball, said flow meter measuring the direction in which the ink moves as a consequence of the movement of the ball. This solution does not appear to be very reliable and only works as long as ink is present in the pen.

From US-A-5,288,993 a track-ball device is known in which the ball is provided with randomly distributed speckles in contrasting colours, and light-sensitive sensor means, so that the movement of the ball can be detected. This detection concept takes up a considerable amount of space underneath and beside the ball and is for this reason alone not suitable for use in a pen-type solution. Furthermore this device requires a ball of a diameter of at least 5 mm.

From WO94/22071 another optical solution is known. This device comprises photo-coupler means that can detect the movement of the ball of a golf ball type that is provided with concave reflectors. This device also takes up a considerable amount of space around the ball and requires a relatively large diameter that makes the solution unsuitable for a proper pen-type solution.

As an alternative to these optical solutions a magnetic solution is known from IBM Technical Disclosure Bulletin, vol. 27, No. 7a. In this magnetic solution a hall effect sensor detects the direction of a magnetic field that corresponds to the angular rotation of a ball. This solution appears both bulky and heavy to operate as permanent magnets of a certain size is required.

Accordingly, the object of the invention is provide an input device for a computer with a recording arrangement which requires considerably less space than the known solutions, thereby making it possible to construct a pen-shaped computer mouse in dimensions corresponding to a ball-point pen or similar writing utensil.

The invention consists of an input device of the introductory mentioned kind, wherein the detection units comprise two reading heads capable of detecting a magnetic signal deposited by a writing head. The invention also concerns a method of detecting angular rotation as set forth in claim 9.

Hereby, a recording arrangement for an input device which contains relative few components, and which is advantageous in terms of space, as the writing and reading units of the detection means advantageously are arranged at the rear side of the ball and only take up little room. This makes this principle suitable for the design of a computer pen, as it may be manufactured with a relatively small cross-sectional diameter because of the small dimensions of the reading units. Moreover, this principle is also useful in connection with the so-called track balls, where consideration of space may also play a role.

In a first embodiment the angular rotations of the ball is detected in a magnetic detecting system, in which two writing heads are positioned preferably at right angles with respect to a reading head. The system will then continuously mark the surface of the ball with various magnetic markings. When the ball rotates, these markings will be detected continuously by the reading head. As the distance between the writing head and the reading head is known, the rotation of the ball with respect to an X-axis and a Y-axis may then be calculated.

The angular rotations of the ball can in an alternative embodiment be transferred to two shafts preferably arranged perpendicular with respect to each other, and that magnetically detectable markings can be deposited or are provided on said shafts. Hereby a particular inexpensive arrangement is provided that is particular advantageous when the ball diameter is of a medium size and/or if the surface of the ball for other reasons is of a non-magnetic material.

The electronic signal processing unit may be an integrated part of the pen. Alternatively the magnetic signals are created in the pen, and directly transmitted to an external signal processing unit for final signal processing. This processing unit can either be incorporated in the transmission receiver in or on the computer.

In a preferred embodiment of the invention, the device is constructed as a computer pen comprising a tubular housing in which the ball is rotatably arranged at one end. Further, at the opposite end the computer pen may be connected to a computer either in the form of a cable connection or a wireless connection. In this embodiment, the pen will be provided with a transmitter and a power supply, such a rechargeable battery or the like. Keys may be arranged on the side of the tubular housing to generate additional control signals for the connected computer. These keys are shaped and arranged in an ergonomically suitable configuration for using the computer pen in manner similar to the use of e.g. a ball-point pen.

The invention will be described more fully below with reference to the accompanying drawing, in which
- fig. 1: is a view of a computer pen according to a preferred embodiment of an input device according to the invention,
- fig. 2: is a view of the structure of a computer pen according to a preferred embodiment of an input device according to the invention,
- fig. 3: is a principal top view of the ball and the detection means, and
- fig. 4: is a signal processing means for a particular embodiment of the invention.

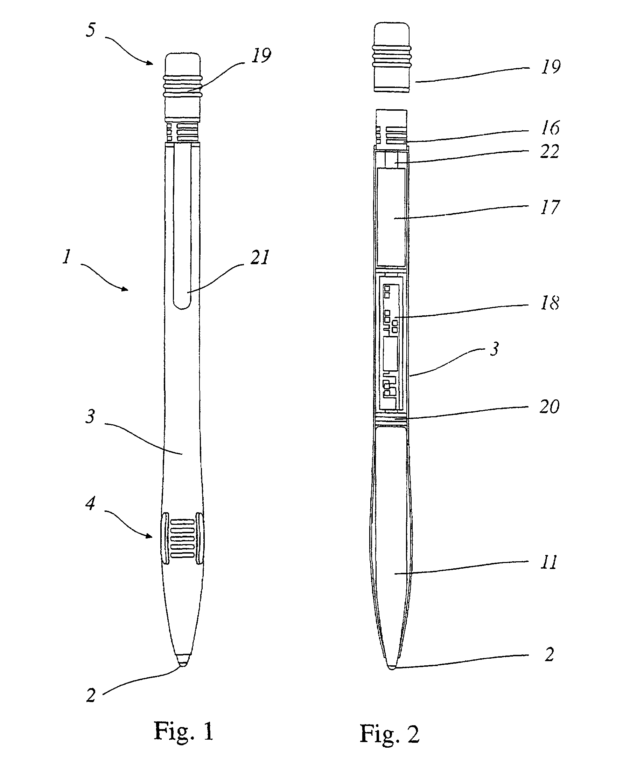

Fig. 1 shows an input device according to the invention constructed as a computer pen 1, which consists of a ball 2 mounted at the lower end of the tubular main part 3 of the pen and transmission means 5 at the opposite end for transmitting signals from the pen 1 to a computer (not shown). The lower part of the main part 3 mounts a key unit 4 comprising two buttons so arranged on the pen 1 as to be aligned with two fingers when the user holds the pen 1 in his hand.

In the embodiment shown, the main part 3 is formed with a substantively circular cross-section, but may of course have any cross-sectional shape, depending on the desired design.

The ball 2 is made of steel or at least provided with a surface susceptible to receive magnetic charging.

The detection means 11 are arranged above the ball 2 inside the main part 3 to record the rotations of the ball in two directions, with which the movements of the pen in the X- and Y-directions via the rotations of the ball may be converted into electrical signals which are transmitted via the transmission means 5 to the computer.

The means of transmitting the electronic signals from the computer pen to the computer may be a wire, or alternatively a wireless connection comprising a receiver unit on the computer and a transmitter unit on the pen, as shown in fig. 1.

Figs. 1 and 2 show a computer pen constructed as a ball-point pen. The pen is provided with a clip 21 so that it may stored in a practical manner in a pocket or the like of a user when the pen is not in use.

Fig. 2 shows the structure of the pen. The top of the detecting means 11 is in contact with a pressure sensitivity meter 20 at one or both of its ends. The pressure on the ball and the size of the ball pressure may be detected hereby. The pen may then be used for graphic input to the computer depending on the installed software application. This allows the pen to be used for the click function by being pressed against the substrate or after having pointed out an icon directly on the screen, so that the pressure sensitivity meter 20 may serve as an alternative or a supplement to the click keys 4, and the pen may also be used for generating graphics, it being possible to convert the ball pressure into a signal for the line thickness used in the drawing. A computer pen according to this embodiment of the invention may thus be used for generating "hand-written" electronic messages or the like, just as other forms of drawing will be possible. The computer pen according to this embodiment of the invention may thus be used in connection with computer-based tasks like a ball-point pen is used today for paper-based tasks.

The structure of the pen moreover comprises a processor unit 18 which is integrated in the pen in the embodiment shown. Alternatively, the processor unit 18 may be integrated in the transmission receiver in or on the computer in which the detected signals from the optical reading unit 11 and the pressure sensitivity meter 20, if this is installed, are converted into electronic signals, which are transmitted wirelessly to the computer by means of an infrared or radio transmission unit. The wireless connection will be based on radio frequency transmission in the preferred embodiment. An exchangeable and/or rechargeable battery 17, such as a lithium battery, is arranged in connection with the processor 18 as a power supply for the electronic units 11, 18, 22 in the pen.

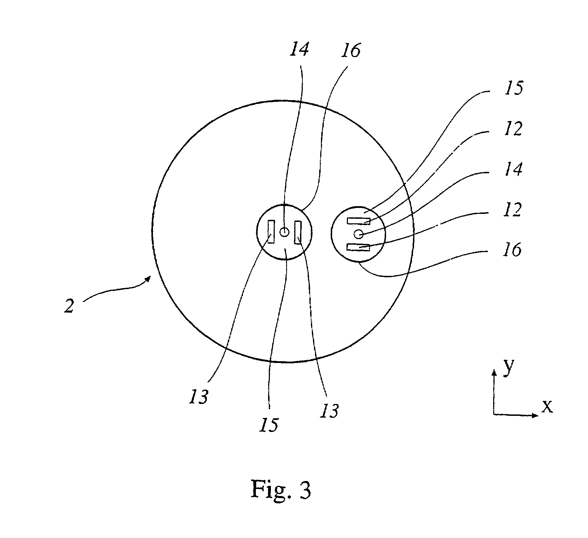

From fig. 3 the arrangement of the detection means 11 in relation to the ball 2 will be appreciated. The detection means 11 comprises two sets of detectors each comprising a writing head 14 being able to deposit a magnetic charge onto the surface of the ball. Depending on the direction of the angular rotation, this change is detected by one of the reading heads 12, 13. These reading heads 12, 13 are arranged in such a way that a reading by the first reading head 12 correspond to a movement in the y-direction and a reading by the second reading head 13 correspond to a movement in the x-direction.

Around said writing head 14 two reading heads 12, 13 and an erasing unit 16 are arranged. The erasing unit 16 is ring-shaped circumscribing the reading heads 12, 13 and the writing head 14. The two detector units measure in the x- and the y-direction respectively and are arranged perpendicular to each other.

The impulse from the writing head 14 deposited on the surface of the ball 2 will - when the ball rotates - be directed towards one of the reading heads 12 or 13. The distance between the reading head 12 or 13 and the writing head 14 is known and by a simple measuring of the transit time the angular velocity of the ball 2 can be calculated. Such calculations can be carried out for both the x and the y direction.

The reading heads 12 and 13 can be spools or other kinds of magnetic sensors.

In an embodiment a discriminate impulse is deposited. Each time an impulse is deposited a time measure is started. The impulse is detected by one of the reading heads 12 or 13, whereby the transit time and the direction is detected and the angular velocity is calculated. When a detection is made by one of the reading head 12 and 13 the next impulse is deposited by the writing head 14.

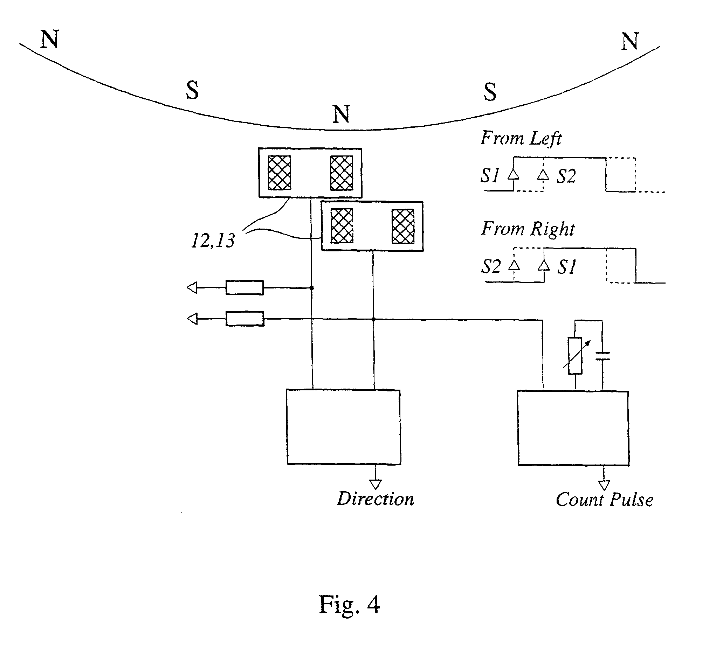

In another embodiment two shafts are used that are in contact with the ball. The detection means 11 can in this embodiment, as shown in fig. 4, comprise only reading heads, since the shafts are provided with magnetic markings. The reading head detect the changes in the magnetic field whereby the direction and the rate of angular rotation can be calculated. The number of magnetic markings must minimum be two. From the actual number of magnetic markings on the surface of the shaft, the rate and direction of angular rotation can be calculated by a pulse count, as shown in fig. 4.

Further, one or more accelerometers may be incorporated in the pen. The accelerometer measures the acceleration of the pen in one, two or three dimensions. The combination of the other possible functions of the pen means that in the writing functions of the pen it is possible to obtain a writing function which is completely equal to an ordinary ball-point pen, etc.

When the ball head of the pen is moved against a substrate, thereby writing on the computer, the pressure sensitivity meter will always exhibit a certain pressure. When the ball head of the pen is lifted from the substrate, e.g. when the pen is lifted to start a new word, letter, drawing, etc., it is typically just desired to have the cursor moved to the new start position without this producing a line on the computer screen/document.

A pressure sensitivity meter 20 is preferably carried out in a conductive rubber material. On one side of this rubber disc a permanent electrical contact is established, whilst the other side is brought into electrical contact when a ball pressure is applied. The rubber disc is shaped in such a way that the surface of contact is increased by an increase in the ball pressure. Alternatively, the pressure sensitivity meter 20 could be provided as a piezoelectric or a strain gauge solution.

The measurement of the acceleration of the pen is converted in an electronic signal processing unit, whereby the movement of the pen may be detected with respect to an X-axis and a Y-axis.

The pen may then be used in a writing/drawing software program so that when the ball head is activated against a substrate in a movement, this movement will be converted into a recording of the movement of the cursor with respect to an X-axis and a Y-axis. The pressure sensitivity meter will simultaneously record a certain pressure on the ball head. The combinations of these two measurements e.g. cause the movement to be recorded as a line, letter or other electronic "written" sign. When the pen is lifted from the substrate to move the cursor to a new starting point for the next line, letter or other electronic "written" sign, the pressure on the pressure sensitivity meter will drop to 0. When the pressure has dropped to 0, the accelerometer or accelerometers take over the detection of the movement of the pen with respect to the X- and Y-axes, and the cursor will then be moved correspondingly with respect to the X- and Y-axes. Relative to the movement via the rotation of the ball, the movement based on the detections of the accelerometer(s) results in no electronic "written" marking on the screen (line, sign, etc.).

The detection means 11 communicate with an electronic signal processing unit which processes the detected signals, which are then passed further on to the computer.

Of course, it is realised by the invention that the magnetic markings deposited on the ball surface could contain predetermined data values, without departing from the basic idea of the invention as defined in the claims. This basic idea, in addition to a computer pen as described above, may also be applied in connection with the construction of other types of input devices, such as track balls or traditional computer mice.

## Claims

1. An input device for positioning a cursor on a computer screen by movement of a ball (2) relative to a substrate, and that these rotary movements of the ball (2) are transformed into corresponding electronic signals, said the input device comprises magnetic detection means (11) for detecting the angular rotation of the ball (2), preferably in two directions perpendicular to each other, said detection means (11) comprising one or more detection units capable of detecting a magnetic signal representing the movement of. the surface of the ball (2), **characterised** in that the detection units comprise two reading heads (12, 13) capable of detecting a magnetic signal deposited by a writing head (14).

2. An input device according to claim 1, **characterised** in that the surface of the ball (2) is continuously marked with magnetic markings in two preferably perpendicular positions, and that these magnetic markings are made by two magnetic writing heads (14).

3. An input device according to claim 1 or 2, **characterised** in that around the reading heads (12, 13) erasing means (16) are provided.

4. An input device according to any of the claims 1 to 3, **characterised** in that the ball (2) is provided with a surface susceptible to receive magnetic charging.

5. An input device according to any one of the claims 1 to 4, c**haracterised** in that the device is constructed- as a computer pen (1) comprising a tubular housing (3) in which the ball (2) is rotatably arranged at one end.

6. An input device according to any of the claims 1 to 5, **characterised** in that the angular, rotations of the ball (2) are transferred to two shafts preferably arranged perpendicular with respect to each other, and that magnetically detectable markings can be deposited on said shafts.

7. An input device according to one or more of the preceding claim, **characterised** in that the device is provided with a pressure sensitivity meter (20) for recording the ball pressure.

8. An input device according to one or more of the preceding claims, **characterised** in that the device is provided with an accelerometer capable of measuring the acceleration of the device, in one, two or three dimensions.

9. A method of detecting angular rotation of a ball (2), such as a ball (2) in a computer input device, **characterised** in that the surface of the ball (2) is continuously marked with magnetic markings in two preferably perpendicular positions, and that these magnetic markings are made by two magnetic writing heads (14), and that one, preferably two magnetic detecting units (15), preferably in the form of reading heads (12, 13), are arranged at the side of the two writing heads (14).

## Patentansprüche

1. Eingabevorrichtung zur Positionierung eines Cursors auf einem Computerbildschirm durch Bewegen eines Balls (2) relativ zu einem Substrat, wobei die Drehbewegungen des Balls (2) in entsprechende elektronische Signale umgeformt werden, wobei die Eingabevorrichtung eine magnetische Erfassungseinrichtung (11) zur Erfassung einer Winkeldrehung des Balls (2) vorzugsweise in zwei zueinander senkrechte Richtungen umfasst, wobei die Erfassungseinrichtung (11) eine Erfassungseinheit oder mehrere Erfassungseinheiten umfasst, die in der Lage sind, ein die Bewegung der Oberfläche des Balls (2) darstellendes magnetisches Signal zu erfassen, dadurch gekennzeichnet, dass die Erfassungseinheiten zwei Leseköpfe (12, 13) umfassen, die in der Lage sind, ein durch einen Schreibkopf (14) aufgebrachtes magnetisches Signal zu erfassen.

2. Eingabevorrichtung nach Anspruch 1, dadurch gekennzeichnet, dass die Oberfläche des Balls (2) kontinuierlich mit magnetischen Markierungen in zwei vorzugsweise senkrechten Positionen markiert ist und dass die magnetischen Markierungen durch zwei magnetische Schreibköpfe (14) erzeugt werden.

3. Eingabevorrichtung nach Anspruch 1 oder 2, dadurch gekennzeichnet, dass um die Leseköpfe (12, 13) herum Löscheinrichtungen (16) bereitgestellt sind.

4. Eingabevorrichtung nach einem der Ansprüche 1 bis 3, dadurch gekennzeichnet, dass der Ball (2) mit einer für den Empfang einer magnetischen Ladung empfänglichen Oberfläche versehen ist.

5. Eingabevorrichtung nach einem der Ansprüche 1 bis 4, dadurch gekennzeichnet, dass die Vorrichtung als ein elektronischer Computerstift (1) aufgebaut ist, der ein schmales Gehäuse (3) umfasst, in dem der Ball (2) an einem Ende drehbar angeordnet ist.

6. Eingabevorrichtung nach einem der Ansprüche 1 bis 5, dadurch gekennzeichnet, dass die Winkeldrehungen des Balls (2) auf zwei Wellen übertragen werden, die vorzugsweise senkrecht zueinander angeordnet sind, und dass die magnetisch erfassbaren Markierungen bei den Wellen aufgebracht werden können.

7. Eingabevorrichtung nach einem oder mehreren der vorhergehenden Ansprüche, dadurch gekennzeichnet, dass die Vorrichtung mit einer druckempfindlichen Messeinrichtung (20) zur Aufzeichnung des Balldrucks versehen ist.

8. Eingabevorrichtung nach einem oder mehreren der vorhergehenden Ansprüche, dadurch gekennzeichnet, dass die Vorrichtung mit einer Beschleunigungsmesseinrichtung versehen ist, die in der Lage ist, die Beschleunigung der Vorrichtung in einer Dimension, in zwei Dimensionen oder in drei Dimensionen zu messen.

9. Verfahren zum Erfassen einer Winkeldrehung eines Balls (2), wie eines Balls (2) in einer Computereingabevorrichtung, dadurch gekennzeichnet, dass die Oberfläche des Balls (2) kontinuierlich mit magnetischen Markierungen in zwei vorzugsweise senkrechten Positionen markiert ist, dass die magnetischen Markierungen durch zwei magnetische Schreibköpfe (14) erzeugt werden und dass eine magnetische Erfassungseinheit, vorzugsweise zwei magnetische Erfassungseinheiten (15), vorzugsweise in der Form von Leseköpfen (12, 13), an der Seite der zwei Schreibköpfe (14) angeordnet sind.

## Revendications

1. Périphérique d'entrée servant à placer un curseur sur un écran d'ordinateur grâce au mouvement d'une bille (2) par rapport à un substrat, et grâce au fait que ces mouvements de rotation de la bille (2) sont transformés en signaux électroniques correspondants, ledit périphérique d'entrée comprenant un moyen de détection magnétique (11) servant à détecter la rotation angulaire de la bille (2), de préférence dans deux directions mutuellement perpendiculaires, ledit moyen de détection (11) comportant une ou plusieurs unités de détection aptes à détecter un signal magnétique représentant le mouvement de la surface de la bille (2), caractérisé en ce que les unités de détection comportent deux têtes de lecture (12, 13) aptes à détecter un signal magnétique déposé par une tête de lecture (14).

2. Périphérique d'entrée selon la revendication 1, caractérisé en ce que des marques magnétiques sont appliquées d'une façon continue sur la surface de la bille (2), à deux emplacements de préférence perpendiculaires, et en ce que ces marques magnétiques sont faites par deux têtes d'écriture magnétiques (14).

3. Périphérique d'entrée selon la revendication 1 ou 2, caractérisé en ce que des moyens d'effacement (16) sont disposés autour des têtes de lecture (12, 13).

4. Périphérique d'entrée selon l'une quelconque des revendications 1 à 3, caractérisé en ce que la bille (2) est dotée d'une surface susceptible de recevoir des charges magnétiques.

5. Périphérique d'entrée selon l'une quelconque des revendications 1 à 4 caractérisé en ce que le dispositif est construit sous la forme d'un stylo informatique (1) comportant un corps tubulaire (3) à une extrémité duquel la bille (2) est installée de manière à pouvoir tourner.

6. Périphérique d'entrée selon l'une quelconque des revendications 1 à 5, caractérisé en ce que les rotations angulaires de la bille (2) sont transmises à deux axes disposés de préférence perpendiculairement l'un à l'autre, et en ce que des marques détectables magnétiquement peuvent être déposées sur lesdits axes.

7. Périphérique d'entrée selon une ou plusieurs des revendications précédentes, le périphérique étant caractérisé en ce qu'il comporte un système de mesure (20) de sensibilité à la pression pour enregistrer la pression de la bille.

8. Périphérique d'entrée selon une ou plusieurs des revendications précédentes, le dispositif étant caractérisé en ce qu'il comporte un accéléromètre apte à mesurer l'accélération du dispositif dans une, deux ou trois dimensions.

9. Procédé de détection de la rotation angulaire d'une bille (2) telle qu'une bille (2) d'un périphérique d'entrée d'ordinateur, caractérisé en ce que des marques magnétiques sont appliquées d'une façon continue sur la surface de la bille (2), à deux emplacements de préférence perpendiculaires, et en ce que ces marques magnétiques sont faites par deux têtes d'écriture magnétiques (14), et en ce qu'une, et de préférence deux unités de détection magnétiques (15), de préférence sous la forme de têtes de lecture (12, 13) sont disposées sur le côté des deux têtes d'écriture (14).
